# EUROPÄISCHE PATENTSCHRIFT

(11) **EP 1 468 599 B1**
(45) Veröffentlichungstag und Bekanntmachung des Hinweises auf die Patenterteilung: **13.05.2015**
(21) Anmeldenummer: 04007748.9
(22) Anmeldetag: 31.03.2004
(51) Int. Cl.: A01D 78/10, B60G 17/052

(54) **Höhenverstell- und Abfedereinrichtung für einen Kreiselschwader**
Height adjusting and damping device for a rotary swather
Dispositif d'ajustage de hauteur et d'amortissement pour une andaineuse rotative

(30) Priorität: 16.04.2003 DE 10317813
(43) Veröffentlichungstag der Anmeldung: 20.10.2004
(73) Patentinhaber: CLAAS Saulgau GmbH, 88348 Bad Saulgau (DE)
(72) Erfinder: Geng, Manfred, 88348 Bad Saulgau (DE)

(56) Entgegenhaltungen:
- EP-A- 0 937 383
- DE-A- 19 618 839
- DE-A- 19 721 130
- DE-U- 29 623 733

## Beschreibung

Die Erfindung bezieht sich auf eine Höhenverstell- und Abfedereinrichtung für **einen Kreiselschwader** gemäß dem Oberbegriff des Patentanspruchs 1.

Ein entsprechendes Kreiselschwader ist beispielsweise aus der EP 0 937 383 A1 bekannt. Mit zunehmend größer werdenden Kreiselschwadern hinsichtlich deren Arbeitsbreite nehmen deren Massen und damit deren Gewichtskräfte erheblich zu. Dabei ist die Gewichtsklasse oberhalb von 3 to bereits häufig überschritten, so dass derartige Kreiselschwader bereits über druckmittelbeaufschlagte Bremsanlagen verfügen.

Wegen der Forderung nach zunehmend größeren Fahrgeschwindigkeiten steht damit gleichermaßen die Forderung im Raum, zur Schonung von Fahrbahndecken und der Gerätschaften, wie Kreiselschwader und Traktor selbst, die Massenkräfte, die infolge der höheren Fahrgeschwindigkeiten zwangsläufig ebenfalls größer werden, zu reduzieren.

Angesprochen sind dabei insbesondere vertikale Beschleunigungskräfte, die beim Durchfahren von Bodenunebenheiten entstehen. Ursächlich dafür sein können beispielsweise Schlaglöcher, Bodenwellen oder Fahrbahnschwellen als Verkehrsberuhigungseinrichtungen in Wohngebieten.

Ebenso ist es dabei von erheblicher Bedeutung, die Lage des Schwerpunktes derartiger Kreiselschwader möglichst bodennah zu halten. Dieses verleiht diesen eine höhere Querfahrstabilität in Kurvenfahrten.

Hier setzt nun die Aufgabe der Erfindung an, in dem diese bemüht ist, eine kombinierte Lösung unter besonders kostengünstigen Vorraussetzungen zur Verfügung zu stellen, die sowohl die geforderten Dämpfungseigenschaften zur Reduktion von Kraftamplituden im Sinne von Vertikalbeschleunigungen als auch die Möglichkeit der bodennahen Schwerpunktsverlagerung in der Transportstellung zu schaffen.

Erfindungsgemäß wird die Aufgabe durch eine Kombination aus einer Höhenverstellund Abfedereinrichtung für einen Kreiselschwader mit den kennzeichnenden Merkmalen des Anspruchs 1 gelöst.

Eine derartige Gestaltung der Höhenverstell- und Abfedereinrichtung ermöglicht eine weitgehende Dämpfung der durch die Rahmenkonstruktion mit deren Ausleger tragenden Rechkreisel verursachenden Beschleunigungskräfte beim Überfahren von Bodenunebenheiten, welches Stoßbelastungen mit entsprechen hohen Kraftamplituden erzeugt. Diese werden auf das Fahrgestell und damit auf die Räder übertragen und werden letztendlich gegenüber dem Boden über diese abgestützt. Dabei durchsetzen diese Kräfte gleichermaßen die Rahmenkonstruktion, die Fahrwerkskonstruktion, die Lager der Räder sowie deren Reifen.

Zur Lösung der Aufgabe werden die Abfederungen der Radachsen mittels pneumatisch gestützter und längenveränderbarer Luftfedern vorgeschlagen, die gleichzeitig so gestaltet sind, dass sie in der Arbeitsstellung eines Kreiselschwaders ausgefahren sind und in dieser eine entsprechend harte Federkennlinie aufweisen, während sie in der Transportstellung eingefahren sind und eine entsprechend weiche Federkennlinie aufweisen. Dieser Effekt führt dabei gleichzeitig zu einer Absenkung der Rahmenkonstruktion in seiner Höhenlage gegenüber dem Boden, die dann eine niedrigere Schwerpunktslage des Kreiselschwaders zur Folge hat.

Weitere vorteilhafte Ausgestaltungen sind Gegenstand der Unteransprüche und werden nachfolgend anhand von Figurendarstellungen näher erläutert und beschrieben.

### Bezugszeichenliste:

- 1: Traktor
- 2: Kreiselschwader
- 3: Unterlenker
- 4: Kupplungseinrichtung
- 5: Rahmenkonstruktion
- 6: Schwadkreisel
- 7: Schwadkreisel
- 8: Fahrwerk
- 9: Stützrad
- 10: Radlagergehäuse
- 11: Schwinge
- 12: Schwenklager
- 13: Anschlagkonsole
- 14: Luftfeder
- 15: Hochachse
- 16: Höhenverstell- und Abfedereinrichtung
- 17: Ausleger
- 18: Klappachse
- α: Neigungswinkel

Es zeigen:
- Fig. 1:: Kreiselschwader in einer abgesenkten Transportstellung
- Fig. 2:: Kreiselschwader in einer angehobenen Vorarbeitsstellung
- Fig. 3:: Kreiselschwader in einer angehobenen Arbeitsstellung

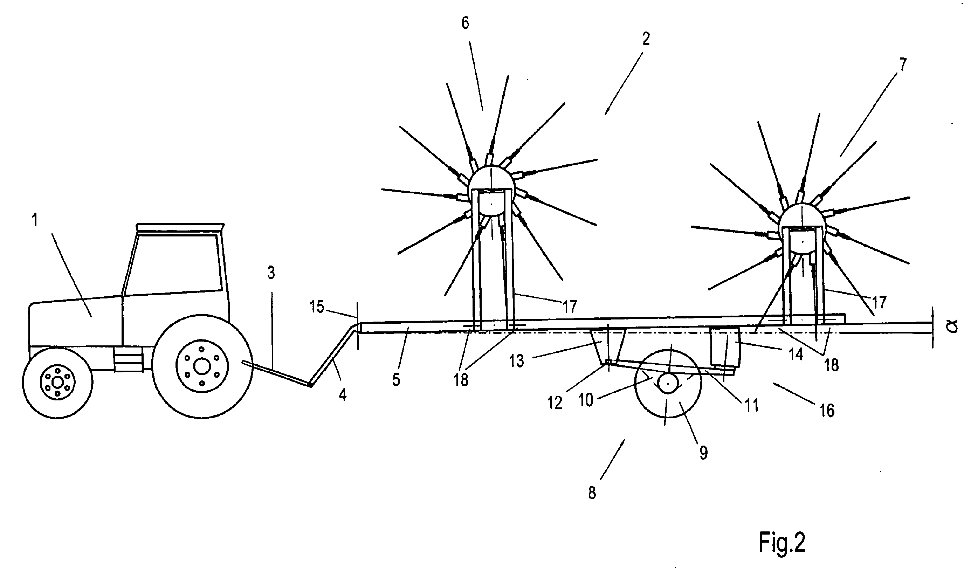

- Fig.2:: Ein anderes Ausführungsbeispiel eines Kreiselschwader in einer abgesenkten Transportstellung

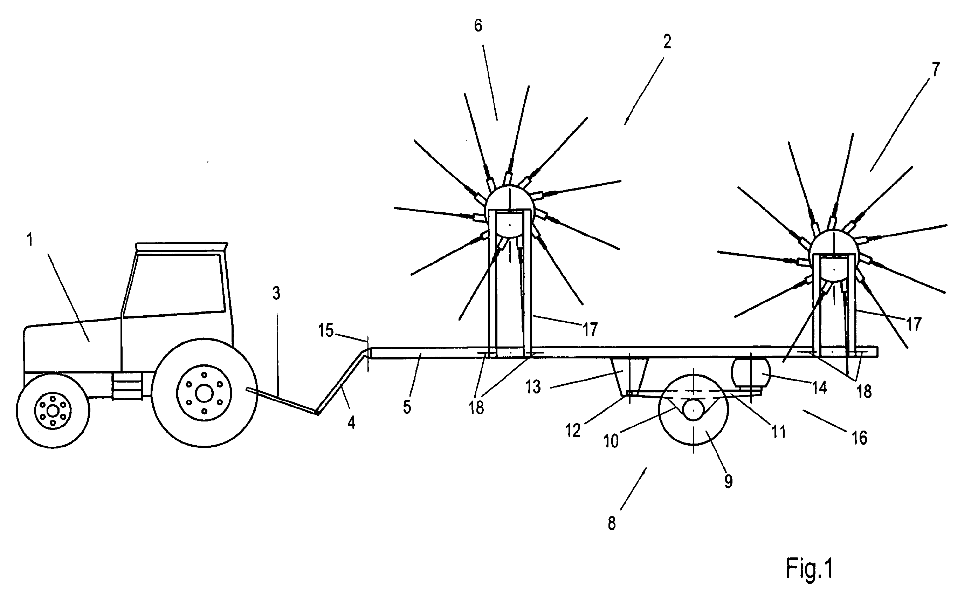

In Figur 1 ist ein schematisch dargestellter einachsiger Kreiselschwader 2 mit wenigstens zwei um lotrechte Achsen umlaufend angetriebene und mit gesteuerten Rechzinken besetzten Schwadkreiseln 6,7, mit einer Abfeder- und Höhenverstelleinrichtung 16 nach der Erfindung in einer Seitenansicht in einer Transportstellung mit hochgeklappten Schwadkreiseln 6,7 in abgesenkter Transportstellung dargestellt. Der Kreiselschwader 2 ist an einem Traktor 1 in dessen Unterlenkern 3 in bekannter Weise so angekoppelt, dass er um eine Hochachse 15 verschwenkbar in Kurvenfahrten ungehindert nachlaufen kann. Die Schwadkreisel 6 und 7 sind vereinfacht dargestellt und sie sind endseitig am freien Ende von Auslegern 6,7 angelenkt, die ihrerseits um Klappachsen verschwenkbar mit der Tragkonstruktion verbunden sind. Die Schwadkreisel 6,7 besitzen ihrerseits in bekannter Weise ein eigenes aus Gründen der übersichtlicheren Darstellung nicht näher dargestelltes Fahrwerk mit Stütz- und Tasträdern, die sich während der Arbeit gegenüber dem Boden abstützen. Die Ausleger 17 sind um horizontale in Fahrtrichtung weisende Klappachsen 18 mit der Rahmenkonstruktion 5 verbunden und können durch entsprechende aus Vereinfachungsgründen nicht näher dargestellte Antriebselemente wahlweise in ihre Arbeitstellung abgesenkt oder in ihre Transportstellung hochgeklappt werden.

Die Rahmenkonstruktion 5 selber verfügt über ein eigenes Fahrwerk 8, welches sich gegenüber dem Boden mit seinen Stützrädern 9 abstützt. Die Stützräder 9 sind in Radlagern in deren Radlagergehäuse 10 gegenüber einer Schwinge 11 abgestützt. Die Schwinge 11 wiederum ist einerseits in einem Schwenklager 12 als Bestandteil einer Anschlagkonsole 13 und andererseits an einem Luftfederbalg als Bestandteil einer pneumatisch beaufschlagten Luftfeder 14 gegenüber der Rahmenkonstruktion 5 abgestützt.

In Fig. 2 ist der Kreiselschwader gemäß Fig. 1 in einer angehobenen Vorarbeitsstellung überführt worden. Dieses geschieht dadurch, indem der Druck in der pneumatischen Luftfeder durch eine entsprechende Druckluftversorgung erhöht wird und damit eine Verlängerung der Druckluftfeder als abstützendes Glied der Schwinge 11 herbeiführt. Dadurch bedingt kann die Schwinge 11 um ihren Drehpunkt im Schwenklager 12 verschwenken. Diese führt gleichzeitig zu einer Anhebung der Rahmenkonstruktion in Arbeitstellung und gleichzeitig wird die Federkennlinie dahingehend verändert, dass diese nun härter eingestellt ist, welches in Arbeitsteilung erwünscht ist, damit die Zinkenspitzen der Rechzinken bei eventuellen Einfederungen der Luftfedern 14 keinen Bodenkontakt bekommen.

Gesteuert werden kann dieser Vorgang durch ein einfaches elektrisch betätigtes Steuerventil, welches mit einem Druckluftbehälter in Verbindung steht, der beispielsweise bei einer pneumatisch betätigten Druckluftbremse eines derartigen Kreiselschwaders ohnehin vorhanden ist. Umgekehrt kann ein derartiges Ventil über eine Ablassstellung verfügen, die es ermöglicht, den pneumatischen Druck in der Luftfeder abzusenken, welches mit einer Kürzung der ausgefahrenen Länge der Druckluftfeder einhergeht. Als Druckluftquelle kann ein bordseitig auf dem Traktor oder geräteseitig vorhandener Kompressor dienen.

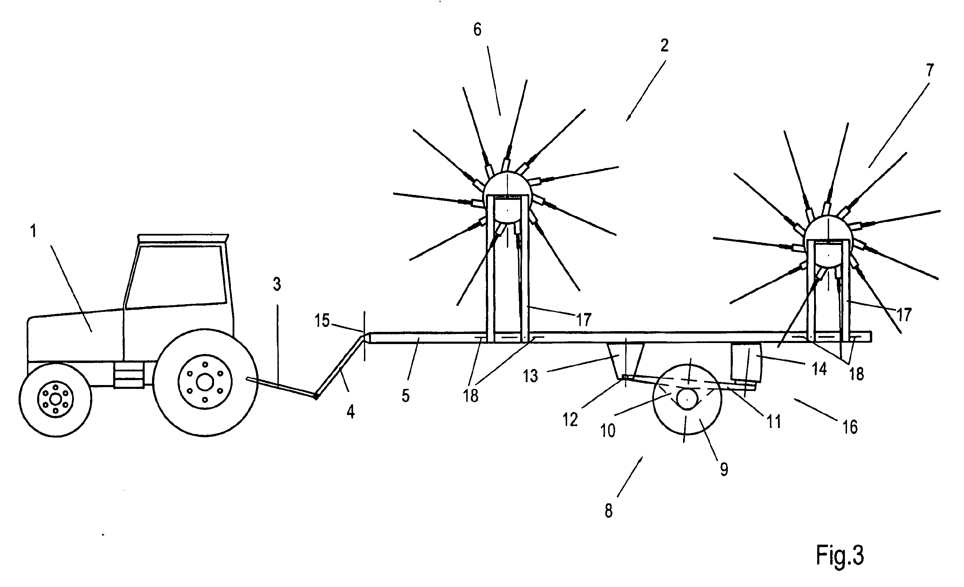

Die Abbildung in Fig.2 zeigt weiterhin, dass durch einseitiges Anheben durch die Luftfeder 14 die Tragkonstruktion 5 in eine Schräglage mit dem Neigungswinkel α geraten ist. Dies kann aber ohne weiteres durch die traktorseitige Nachjustierung der Unterlenker 3 kompensiert und ausgeglichen werden. Fig. 3 zeigt diesen in seiner Schräglage nunmehr kompensierten d.h. ausgeglichenen Zustand, der dort dargestellt ist.

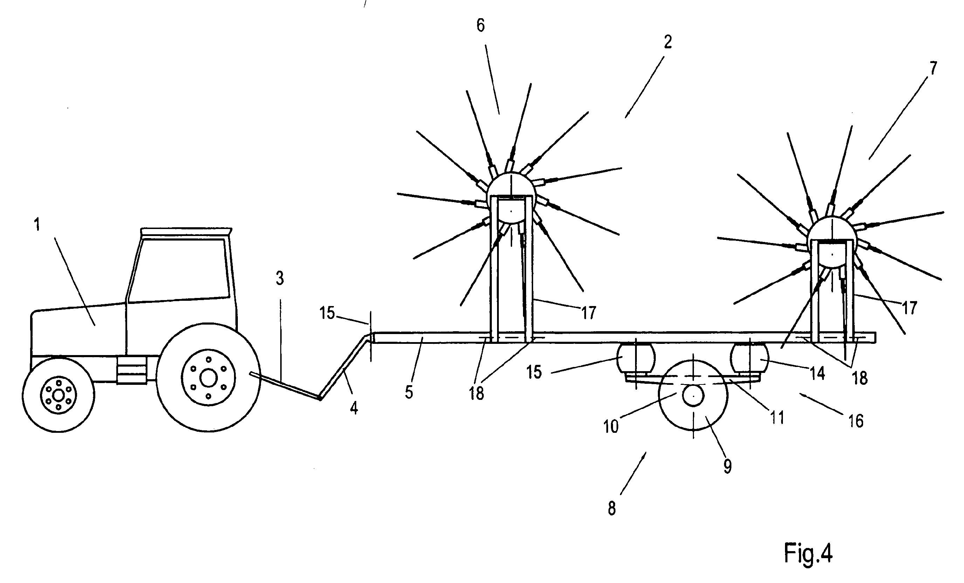

Fig. 4 zeigt ein anderes Ausführungsbeispiel eines Kreiselschwaders 2 in einer abgesenkten Transportstellung. In diesem Ausführungsbeispiel ist die Schwinge 11 direkt mittels zwei Luftfedern 14,15 gegenüber der Tragkonstruktion abgestützt.

Die in den Fig. 1 bis Fig. 4 dargestellten Kreiselschwader verfügen je Fahrgestell 8 mindestens über zwei Stützräder 9, die vorzugsweise mittig zwischen den Kreiseln angeordnet sind. Die mittige Anordnung besitzt dabei den Vorteil, dass die Gewichtsverteilung so ausgelegt ist, dass das Fahrgestell (8) ein Maximum an Gewichtslast des Kreiselschwaders (2) aufnimmt und somit der Traktor (1) als Zugfahrzeug dabei optimal entlastet ist. Diese Ausgestaltung nach der Erfindung ist analog auch für selbstfahrende Kreiselschwader übertragbar.

Die Luftfedern können dabei vorzugsweise aus Rollfaltenbalgfedern bestehen, die besonders große Verstell- und Federwege ermöglichen.

Die Erfindung ist prinzipiell an einem einachsigen Kreiselschwader 2 dargestellt, kann aber selbstverständlich auch auf mehrachsige Kreiselschwader angewandt werden.

Die vorliegende Erfindung ermöglicht es somit auf besonders kostengünstige Weise einen Kreiselschwader herzustellen, und die dadurch zur erfindungsgemäßen Lösung der Probleme in besonders wirtschaftlicher Weise beiträgt.

## Patentansprüche

1. Höhenverstellbarer gezogener oder selbstfahrender mittels eines Fahrwerks (8) am Boden abgestützter Kreiselschwader (2) mit wenigstens zwei um lotrechte Achsen umlaufend angetriebene und gesteuerte mit Rechzinken besetzten Schwadkreiseln (6,7), die über Tast- und Stützräder in Arbeitsteilung am Boden abgestützt und mittels Ausleger (6,7) an einer Tragkonstruktion (5) angelenkt sind, **dadurch gekennzeichnet, dass** das Fahrwerk (8) mit einer Höhenverstell- und Abfedereinrichtung (16) mit wenigstens zwei längenveränderbaren pneumatisch mit veränderlichem Druck beaufschlagbaren Luftfedern (14) gegenüber der Rahmenkonstruktion (5) abgestützt ist, wobei die Luftfedern (14) so gestaltet und ansteuerbar sind, dass sie in der Arbeitsstellung eines Kreiselschwaders (2) ausgefahren sind und in dieser eine entsprechend harte Federkennlinie aufweisen, während sie in der Transportstellung eingefahren sind und eine entsprechend weiche Federkennlinie aufweisen.

2. Kreiselschwader nach Anspruch 1, **dadurch gekennzeichnet, dass** wenigstens eine Luftfeder (14) je Stützrad (9) einerseits an einer Schwinge und andererseits an der Tragkonstruktion abgestützt ist.

3. Kreiselschwader nach Anspruch 1, **dadurch gekennzeichnet, dass** zwei Luftfedern (14) je Stützrad (9) einerseits an einer Schwinge und andererseits an der Tragkonstruktion abgestützt sind.

4. Kreiselschwader nach Anspruch 1 und einem oder mehreren den vorhergehenden Ansprüchen, **dadurch gekennzeichnet, dass** die Luftfedern als Rollfaltenbalg-Luftfedern ausgeführt sind.

## Claims

1. A height-adjustable towed or self-propelled rotary swather (2) which is supported on the ground by means of a chassis (8), comprising at least two swathing rotors (6, 7) which are controlled and driven in rotation about vertical axes and equipped with raking prongs and which are supported on the ground in the working position by way of sensing and support wheels and are mounted pivotably to a carrier structure (5) by means of cantilever arms (17), **characterised in that** the chassis is supported relative to the frame structure (5) with a height adjusting and springing device (16) with at least two variable-length pneumatic springs (14) which can be pneumatically acted upon with a variable pressure, wherein the pneumatic springs (14) are so designed and actuable that they are extended in the working position of a rotary swather (2) and in same have a correspondingly hard spring characteristic while they are retracted in the transport position and have a correspondingly soft spring characteristic.

2. A rotary swather according to claim 1 **characterised in that** at least one pneumatic spring (14) for each support wheel (9) is supported on the one hand at a swing arm and on the other hand at the carrier structure.

3. A rotary swather according to claim 1 **characterised in that** at least two pneumatic springs (14) for each support wheel (9) are supported on the one hand at a swing arm and on the other hand at the carrier structure.

4. A rotary swather according to claim 1 and one or more of the preceding claims **characterised in that** the pneumatic springs are in the form of rolling bellows pneumatic springs.

## Revendications

1. Andaineur rotatif (2) réglable en hauteur, tracté ou automoteur, prenant appui au sol au moyen d'un train de roulement (8), comprenant au moins deux rotors d'andainage (6, 7) qui sont entraînés et commandés en rotation autour d'axes verticaux et garnis de dents râteleuses et qui, en position de travail, prennent appui au sol par l'intermédiaire de roues de palpage et d'appui et sont articulés sur un bâti porteur (5) au moyen de bras (6,7), **caractérisé en ce que** le train de roulement (8) prend appui sur le bâti (5) par l'intermédiaire d'un dispositif de réglage en hauteur et d'amortissement (16) comprenant au moins deux ressorts pneumatiques (14) de longueur variable, sollicités pneumatiquement par une pression variable, les ressorts pneumatiques (14) étant conçus et commandés de façon à être sortis dans la position de travail d'un andaineur rotatif (2) et à présenter, dans ladite position, une caractéristique élastique d'une dureté correspondante, tandis que, dans la position de transport, ils sont rentrés et présentent une caractéristique élastique d'une mollesse correspondante.

2. Andaineur rotatif selon la revendication 1, **caractérisé en ce qu'**au moins un ressort pneumatique (14) par roue d'appui (9) prend appui, d'une part, sur un bras oscillant et, d'autre part, sur le bâti porteur.

3. Andaineur rotatif selon la revendication 1, **caractérisé en ce que** deux ressorts pneumatiques (14) par roue d'appui (9) prennent appui, d'une part, sur un bras oscillant et, d'autre part, sur le bâti porteur.

4. Andaineur rotatif selon la revendication 1 et une ou plusieurs des revendications précédentes, **caractérisé en ce que** les ressorts pneumatiques sont conformés en ressorts pneumatiques à soufflet enveloppant.
